# FASCICULE DE BREVET EUROPEEN

(11) **EP 4 392 691 B1**
(45) Date de publication et mention de la délivrance du brevet: **28.01.2026**
(21) Numéro de dépôt: 22761091.2
(22) Date de dépôt: 01.08.2022
(51) Int. Cl.: F16H 25/18, F16H 25/20

(54) **DISPOSITIF ET PROCÉDÉ DE POSITIONNEMENT POUR INSTRUMENT OPTIQUE**
VORRICHTUNG UND VERFAHREN ZUR POSITIONIERUNG EINES OPTISCHEN INSTRUMENTS
OPTICAL INSTRUMENT POSITIONING DEVICE AND METHOD

(30) Priorité: 25.08.2021 FR 2108887
(43) Date de publication de la demande: 03.07.2024
(73) Titulaire: Université Paris-Saclay, 91190 Gif-sur-Yvette (FR); Centre National de la Recherche Scientifique, 75016 Paris (FR)
(72) Inventeur: BOUZIT, Mehdi, 91940 LES ULIS (FR); HAMM, Vincent, 91190 GIF-SUR-YVETTE (FR); LEQUERTIER, Guillaume, 77100 MAREUIL LES MEAUX (FR)
(74) Mandataire: IPAZ
(86) Numéro de dépôt international: PCT/EP2022/071588
(87) Numéro de publication internationale: WO 2023/025531

(56) Documents cités:
- JP-A- 2003 075 572
- US-A1- 2009 045 699
- US-A1- 2017 030 514
- US-A1- 2017 284 522

## Description

### Domaine technique

L'invention se rapporte au domaine du positionnement d'équipements nécessitant un positionnement précis, par exemple un équipement d'instrument optique.

L'invention présente un intérêt particulier, mais nullement limitatif, dans le domaine de l'instrumentation spatiale.

### État de la technique antérieure

Dans le domaine de l'instrumentation spatiale, il est connu de positionner des équipements tels que des miroirs ou des optiques à l'aide de montures opto-mécaniques.

Le document WO2012/041462A2 divulgue un tel dispositif de positionnement, comprenant six pieds de longueur réglable qui forment un hexapode apte à modifier la position de l'équipement selon les six degrés de liberté. Le document US 2017/030514 A1 divulgue un mécanisme de mouvement linéaire utilisé dans une tige de liaison comprenant au moins un joint flexible à déplacement limité. Ce document décrit en particulier un agencement hexapode à six degrés de liberté comprenant une plaque de base et trois ensembles de support A, B et C, chacun étant composé du bipode et du mécanisme de mouvement linéaire.

Le positionnement de l'équipement à l'aide d'un tel dispositif s'avère toutefois long et fastidieux puisqu'il est nécessaire d'ajouter et retirer des cales de réglage pour modifier la longueur de chacun des pieds. Cela nécessite de réaliser de façon itérative des étapes de mesure, de détermination d'épaisseur des cales, de démontage, de calage et de remontage.

De plus, un tel dispositif pose des problèmes de reproductibilité du réglage compte tenu de l'ajout et du retrait des cales et des étapes de montage et démontage correspondantes.

### Exposé de l'invention

L'invention vise à surmonter les inconvénients des dispositifs de positionnement conventionnels et, en particulier, à simplifier le positionnement d'un équipement d'instrument optique spatial ou de toute autre instrument nécessitant un positionnement précis dans l'espace tridimensionnel.

A cet effet, l'invention a pour objet un dispositif de positionnement d'un équipement tel qu'un miroir d'instrument optique spatial tel que décrit dans la revendication Ce dispositif comprend une plate-forme destinée à recevoir l'équipement ou formant une partie de l'équipement ainsi qu' un ou plusieurs organes d'actionnement reliés à la plate-forme. Selon l'invention, chacun desdits organes d'actionnement comprend un corps élastiquement déformable et un mécanisme de commande configuré pour pouvoir déformer le corps de sorte à modifier la position de la plate-forme.

Un tel organe d'actionnement permet de modifier la longueur du corps et par suite la position de la plate-forme et de l'équipement sans utilisation d'éléments de réglage amovibles tels que des cales. L'équipement peut ainsi être déplacé ou repositionné par simple déformation du corps de l'organe d'actionnement.

L'invention permet ainsi de simplifier le positionnement de l'équipement tout en assurant un positionnement précis et reproductible.

Dans un mode de réalisation, le corps comprend un élément effecteur et deux branches reliées chacune à l'élément effecteur de sorte que les branches soient espacées l'une par rapport à l'autre selon une direction de commande, le mécanisme de commande étant configuré pour appliquer sur les branches un effort mécanique apte à modifier la distance les séparant selon la direction de commande de manière à déplacer l'élément effecteur selon une direction d'actionnement perpendiculaire ou oblique par rapport à la direction de commande.

En particulier, le corps peut être configuré de sorte qu'un rapprochement, respectivement un éloignement, de ces branches l'une par rapport à l'autre selon la direction de commande entraîne un déplacement de l'élément effecteur dans un premier sens, respectivement un deuxième sens, selon la direction d'actionnement.

L'élément effecteur est de préférence formé par une partie du corps qui peut former une extrémité du corps le long de la direction d'actionnement.

L'élément effecteur peut en l'occurrence être formé par un simple élément structural du corps reliant les branches l'une à l'autre.

L'élément effecteur peut ainsi être relié à la plate-forme afin de la déplacer lorsque le corps est déformé sous l'action du mécanisme de commande.

Dans un mode de réalisation, chacune des branches du corps comprend une pièce de liaison reliée au mécanisme de commande et un élément flexible tel qu'une lame reliant la pièce de liaison à l'élément effecteur du corps. Conformément à l'invention le mécanisme de commande comprend une vis micrométrique.

Une vis micrométrique permet d'obtenir un réglage précis de manière simple.

La vis micrométrique peut comprendre un premier filetage externe et un deuxième filetage externe. Le premier filetage externe peut coopérer avec un filetage interne formé par une première partie du corps, par exemple par ladite pièce de liaison de l'une des branches du corps, ou par une première pièce du mécanisme de commande reliée à cette première partie du corps. Le deuxième filetage externe peut coopérer avec un filetage interne formé par une deuxième partie du corps, par exemple par ladite pièce de liaison de l'autre branche du corps, ou par une deuxième pièce du mécanisme de commande reliée à cette deuxième partie du corps.

Conformément à l'invention la vis micrométrique forme une première vis de réglage, le mécanisme de commande comprenant une deuxième vis de réglage pourvue d'un orifice formant un filetage interne qui coopère avec un filetage externe de la première vis, le mécanisme de commande étant configuré pour pouvoir déformer le corps sous l'action d'un déplacement en rotation de la première vis et/ou de la deuxième vis.

Dans le cadre de ce mode de réalisation, la deuxième vis comprend de préférence un filetage externe qui coopère avec une pièce du mécanisme de commande reliée à ladite deuxième partie du corps.

Dans un mode de réalisation, l'organe d'actionnement comprend des moyens de guidage desdites branches du corps, en translation le long de la direction de commande.

Les moyens de guidage peuvent être formés par lesdites première et deuxième pièces du mécanisme de commande, ou par deux pièces solidaires chacune de l'une respective des branches du corps, ces pièces étant de préférence reliées l'une à l'autre selon une liaison pivot glissant ou glissière.

Dans une variante de réalisation, le mécanisme de commande comprend un actionneur piézoélectrique.

Cet actionneur peut comprendre un matériau piézoélectrique déformable interposé entre les branches du corps de l'organe d'actionnement.

Dans une autre variante de réalisation, le mécanisme de commande comprend un moteur pas à pas.

Dans un mode de réalisation, le corps est relié à la plate-forme par un organe de liaison, cet organe de liaison étant relié au corps selon une liaison définissant au moins un degré de liberté.

Plus particulièrement, cet organe de liaison peut être relié audit élément effecteur.

La liaison entre cet organe de liaison et le corps peut être une liaison pivot ou rotule.

Selon une première variante, l'organe de liaison est relié au corps par une tige.

Cette tige de liaison peut ainsi former une liaison rotule définissant trois degrés de liberté. Selon une deuxième variante, l'organe de liaison est relié au corps par une lame.

Cette lame de liaison peut ainsi former une liaison pivot définissant un unique degré de liberté.

De manière alternative ou complémentaire, l'organe d'actionnement peut comprendre un organe de liaison semblable à celui qui vient d'être décrit et destiné à relier le corps à l'embase.

Selon l'invention le dispositif de positionnement comprend six organes d'actionnement. Les organes d'actionnement forment ainsi un hexapode.

Conformément à l'invention chacun des organes d'actionnement comprend un corps élastiquement déformable et un mécanisme de commande configuré pour pouvoir déformer le corps de sorte à modifier la position de la plate-forme.

Dans un mode de réalisation, le dispositif comprend un système de mesure configuré pour déterminer une position de la plate-forme.

Le système de mesure peut être optique.

Selon un autre aspect, l'invention se rapporte aussi à un procédé de positionnement d'un équipement, tel qu'un miroir d'instrument optique spatial, à l'aide d'un dispositif tel que défini ci-dessus.

Dans un mode de mise en œuvre, le procédé comprend une étape de détermination de la position de la plate-forme à l'aide du système de mesure précité, et une étape de détermination d'une configuration cible d'un ou plusieurs desdits organes d'actionnement, en fonction d'une position cible de la plate-forme.

L'invention concerne aussi un outil informatique configuré pour assister un opérateur dans la mise en œuvre d'un procédé tel que défini ci-dessus.

De préférence, cet outil intègre un modèle du dispositif précité.

L'outil peut être configuré pour fournir des instructions de réglage à partir d'une position initiale de la plate-forme de ce dispositif.

Cette position initiale peut être déterminée à l'aide du système de mesure précité.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en perspective d'un dispositif de positionnement d'un équipement tel qu'un miroir parabolique, comprenant des organes d'actionnement selon un premier mode de réalisation de l'invention ;
[Fig. 2] est une vue schématique en perspective de l'un des organes d'actionnement de la figure 1 ;
[Fig. 3] est une vue schématique en coupe de l'organe d'actionnement de la figure 2 ;
[Fig. 4] est une vue schématique en coupe d'un organe d'actionnement selon un deuxième mode de réalisation de l'invention ;
[Fig. 5] est une vue schématique en perspective d'un organe d'actionnement selon un troisième mode de réalisation de l'invention.

### Description détaillée de modes de réalisation

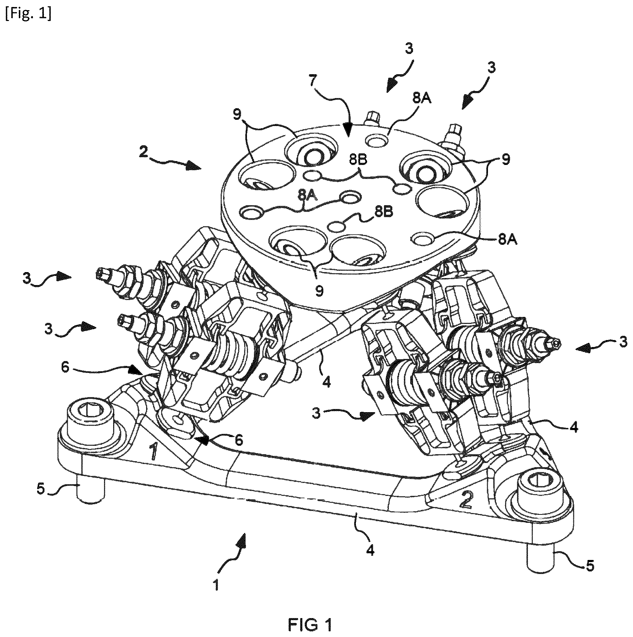

Il est représenté sur la figure 1 un dispositif conforme à l'invention.

Dans cet exemple nullement limitatif, le dispositif comprend une embase 1, une plate-forme 2 et six organes d'actionnement 3.

L'embase 1 forme un trépied globalement triangulaire qui présente trois extrémités reliées entre elles par des traverses 4.

Chaque extrémité de l'embase 1 comprend un moyen de fixation 5 prévu pour relier fixement le dispositif sur un support principal (non représenté).

Au niveau de chacune de ses extrémités, l'embase 1 comprend deux ouvertures 6 pourvues chacune d'un lamage définissant un logement pour un écrou (non visible ; voir plus loin ci-dessous).

La plate-forme 2 comprend un corps définissant une surface supérieure 7 plane circulaire.

Le corps de la plate-forme 2 comprend d'une part des orifices 8A qui débouchent chacun sur la surface supérieure 7. D'autre part, le corps de la plate-forme 2 est traversé par des orifices 8B, ainsi que par des ouvertures 9 qui sont chacune pourvues d'un lamage définissant un logement pour un écrou (voir plus loin ci-dessous).

Dans l'exemple de la figure 1, chacun des organes d'actionnement 3 comprend deux extrémités dont l'une est reçue dans l'une respective des ouvertures 6 de l'embase 1 et l'autre dans l'une respective des ouvertures 9 de la plate-forme 2.

Les organes d'actionnement 3 sont configurés pour pouvoir modifier la position de la plate-forme 2 relativement à l'embase 1.

Dans cet exemple, le dispositif est destiné à supporter un miroir parabolique d'un instrument optique spatial (non représenté). Le miroir peut être positionné sur la plate-forme 2 à l'aide de pions de centrage (non représentés) montés serrés dans les orifices 8A et être verrouillé à la plate-forme 2 par des vis (non représentées) traversant les orifices 8B.

Dans le cadre d'une telle application, l'embase 1 peut être fixée à une partie d'un satellite (non représenté) formant le support principal précité.

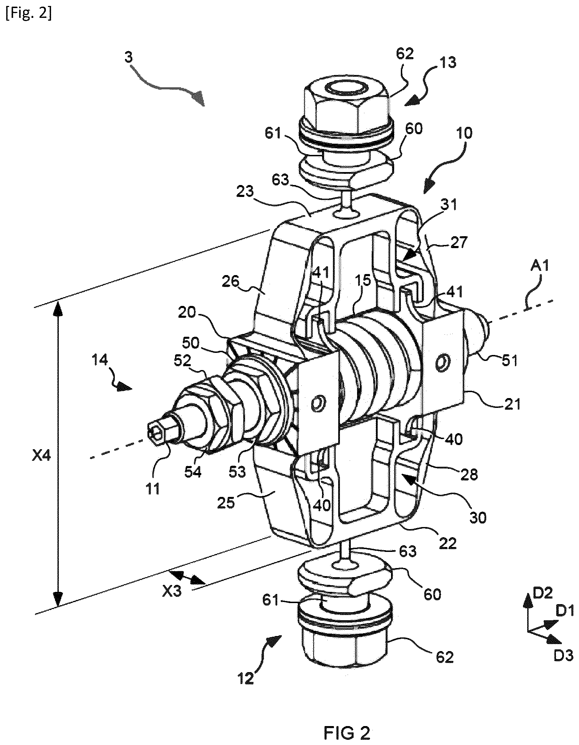

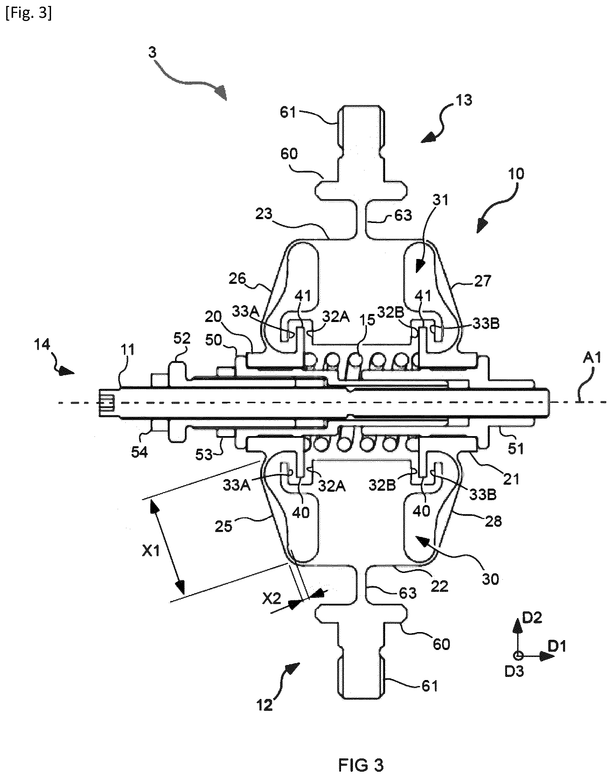

Il va maintenant être décrit en référence aux figures 2 et 3 l'un des organes d'actionnement 3 de la figure 1. La description qui suit s'applique par analogie à chacun des organes d'actionnement 3 de la figure 1.

Les figures 2 et 3 comprennent un repère D1-D2-D3 définissant respectivement une première direction, une deuxième direction et une troisième direction de référence.

De manière générale, l'organe d'actionnement 3 des figures 2 et 3 comprend un corps 10, deux organes de liaison 12 et 13, un mécanisme de commande 14 et un ressort 15 de précontrainte.

Le corps 10, aussi appelé « barre », s'étend le long de la direction D2, appelée « direction d'actionnement », et comprend dans cet exemple deux éléments 22 et 23 formant respectivement une extrémité inférieure et une extrémité supérieure du corps 10, ainsi que deux branches reliant les extrémités inférieure 22 et supérieure 23 l'une à l'autre.

Une première de ces branches, située vers la gauche des figures 2 et 3, comprend un élément central 20 qui forme une pièce de liaison du corps 10 avec le mécanisme de commande 14, ainsi que deux éléments 25 et 26 reliant la pièce de liaison 20 aux extrémités inférieure 22 et supérieure 23, respectivement.

La deuxième de ces branches, située vers la droite des figures 2 et 3, comprend également un élément central 21 qui forme une pièce de liaison du corps 10 avec le mécanisme de commande 14, ainsi que deux éléments 27 et 28 reliant la pièce de liaison 21 aux extrémités supérieure 23 et inférieure 22, respectivement.

Les pièces de liaison 20 et 21 présentent chacune une forme globalement parallélépipédique leur permettant de transmettre des efforts aux autres parties du corps 10 sans se déformer.

Dans cet exemple, les deux branches du corps 10 sont symétriques l'une par rapport à l'autre par rapport à un plan D2-D3 et les extrémités inférieure 22 et supérieure 23 du corps 10 sont symétriques l'une par rapport à l'autre par rapport à un plan D1-D3.

Les pièces de liaison 20 et 21 du corps 10 sont espacées l'une par rapport à l'autre selon la première direction D1, appelée « direction de commande ».

Les extrémités inférieure 22 et supérieure 23 du corps 10 sont espacées l'une par rapport à l'autre selon la direction d'actionnement D2.

Chacun des éléments 25 à 28 forme dans cet exemple une lame flexible, c'est-à-dire un élément présentant une épaisseur relativement petite par rapport à ses dimensions principales.

Ainsi, en référence à la figure 3, la lame 25 s'étend entre la pièce de liaison 20 et l'extrémité inférieure 22 de manière à définir une longueur X1 relativement grande par rapport à l'épaisseur X2 moyenne de cette lame 25.

En référence à la figure 2, la lame 25 s'étend par ailleurs le long de la direction D3 de manière à définir une largeur X3 qui est relativement grande par rapport à l'épaisseur X2 moyenne de cet élément 25.

Il en va de même pour les lames 26, 27 et 28 qui présentent dans cet exemple la même géométrie que la lame 25.

Dans cet exemple, le corps 10 de l'organe d'actionnement 3 comprend aussi deux éléments d'arrêt 30 et 31 qui s'étendent entre les deux branches du corps 10 selon la direction D1 et à distance des lames 25-28 de manière à ne pas empêcher leur déformation.

L'élément d'arrêt 30 s'étend au droit d'une surface interne de l'extrémité inférieure 22 et l'élément d'arrêt 31 s'étend au droit d'une surface interne de l'extrémité supérieure 23.

Chacun de ces éléments d'arrêt 30 et 31 présente, à l'opposé de la surface interne de l'extrémité 22, ou respectivement 23, une extrémité libre en forme de double fourche définissant deux surfaces de butée interne 32A et 32B et deux surfaces de butée externe 33A et 33B.

Les surfaces de butée 32A, 32B, 33A et 33B de chacun des éléments d'arrêt 30 et 31 sont espacées les unes des autres selon la direction D1.

En référence à la figure 3, la pièce de liaison 20 du corps 10 comprend deux pattes 40 et 41 configurées pour s'étendre, selon la direction D1, entre les surfaces de butée 32A et 33A des éléments d'arrêt 30 et 31. Symétriquement, la pièce de liaison 21 du corps 10 comprend elle aussi deux pattes 40 et 41 configurées pour s'étendre, selon la direction D1, entre les surfaces de butée 32B et 33B des éléments d'arrêt 30 et 31.

Le corps 10 est configuré de sorte que lorsqu'un effort est appliqué sur les pièces de liaison 20 et 21 de manière à les rapprocher l'une de l'autre selon la direction de commande D1, les lames 25 à 28 se déforment entraînant un éloignement des extrémités 22 et 23 l'une par rapport à l'autre selon la direction d'actionnement D2, c'est-à-dire une augmentation de la longueur X4 du corps 10 de l'organe d'actionnement 3 (voir figure 2).

Il en résulte un déplacement relatif de l'extrémité supérieure 23 du corps 10, aussi appelée « élément effecteur », le long de la direction d'actionnement D2 dans un sens allant vers la plate-forme 2.

Inversement, lorsqu'un effort est appliqué sur les pièces de liaison 20 et 21 de manière à les éloigner l'une de l'autre selon la direction de commande D1, les lames 25 à 28 se déforment entraînant un rapprochement des extrémités 22 et 23 l'une par rapport à l'autre selon la direction d'actionnement D2, c'est-à-dire une diminution de la longueur X4 du corps 10 de l'organe d'actionnement 3.

Il en résulte un déplacement relatif de l'élément effecteur 23 du corps 10 le long de la direction d'actionnement D2 dans un sens allant vers l'embase 1.

Bien entendu, la flexibilité des lames 25-28 ainsi que la déformabilité élastique du corps 10 peuvent résulter de nombreuses géométries du corps 10 et en particulier des éléments 25-28. Par exemple, dans des modes de réalisation non représentés, chacune des lames 25-28 des figures 2 et 3 peut comprendre une ou plusieurs rainures ou ouvertures ou encore être remplacée par plusieurs lames de largeur inférieure à la largeur X3 des lames de la figure 2 ou encore par des lames en forme d'ellipse.

Dans cet exemple, les surfaces de butée interne 32A et 32B limitent le déplacement des pièces de liaison 20 et 21 dans le sens d'un rapprochement de celles-ci selon la direction D1, tandis que les surfaces de butée externe 33A et 33B limitent le déplacement des pièces de liaison 20 et 21 dans le sens d'un éloignement de celles-ci selon la direction D1.

Les éléments d'arrêt 30 et 31 permettent ainsi de limiter la déformation du corps 10 afin de ne pas dépasser sa limite élastique.

Un élément de rigidification ou de freinage tel que de la colle peut être interposé entre les pattes 40 et 41 de chacune des pièces de liaison 20 et 21 et les surfaces 32A et 32B, ou 33A et 33B, pour verrouillage du réglage. Cela permet d'augmenter la rigidité des organes d'actionnement 3, par exemple lors du lancement d'une fusée embarquant le dispositif. Cela permet aussi de supporter un équipement plus massif dans de telles conditions.

Concernant plus spécifiquement la liaison du corps 10 avec l'embase 1 et la plate-forme 2, les organes de liaison 12 et 13 des figures 2 et 3 comprennent chacun un collet 60 définissant une surface externe au droit de laquelle s'étend un arbre fileté 61 prévu pour coopérer avec un écrou 62.

Le collet 60 de l'organe de liaison 12, respectivement 13, est relié à l'extrémité inférieure 22, respectivement supérieure 23, du corps 10 par une tige de liaison 63 qui est fixée à ces pièces de manière à s'étendre d'une part au droit d'une surface externe de l'extrémité inférieure 22, respectivement supérieure 23, du corps 10 et d'autre part au droit d'une surface interne du collet 60 de l'organe 12, respectivement 13.

La tige de liaison 63 de chacun des organes de liaison 12 et 13 est configurée pour autoriser un déplacement relatif de ces organes de liaison 12 et 13 par rapport au corps 10, définissant chacun une liaison rotule.

En référence aux figures 1 à 3 et à la description qui précède, l'organe d'actionnement 3 peut ainsi être relié à l'embase 1 par l'intermédiaire de l'organe de liaison 12 et à la plate-forme 2 par l'intermédiaire de l'organe de liaison 13.

A cet effet, l'arbre fileté 61 de l'organe de liaison 13 est logé dans l'une des ouvertures 9 de la plate-forme 2 de sorte que la surface externe du collet 60 vienne en appui sur une surface de la plate-forme 2 et de sorte que l'écrou 62 engagé sur l'arbre fileté 61 verrouille cette liaison en exerçant un effort de serrage sur une surface d'appui formée par le lamage de cette ouverture 9.

De manière analogue, l'arbre fileté 61 de l'organe de liaison 12 est logé dans l'une des ouvertures 6 de l'embase 1 de sorte que la surface externe du collet 60 vienne en appui sur une surface de l'embase 1 et de sorte que l'écrou 62 engagé sur l'arbre fileté 61 verrouille cette liaison en exerçant un effort de serrage sur une surface d'appui formée par le lamage de cette ouverture 6.

De tels organes de liaison 12 et 13 permettent de réduire les problèmes tribologiques, notamment lorsque le dispositif est placé dans un environnement sous vide, et d'éviter ainsi de recourir, par exemple, à un traitement des surfaces de contact.

Concernant maintenant le mécanisme de commande 14, celui-ci comprend dans cet exemple deux vis de réglage 11 et 52 qui permettent chacune de déformer le corps 10 avec un niveau de précision respectif.

La vis 11 des figures 2 et 3 est une vis micrométrique, ou vis différentielle, s'étendant le long de la direction D1 et présentant un axe de rotation A1.

Cette vis 11 comprend une première partie (à droite sur la figure 3) qui présente un premier filetage externe et une deuxième partie (à gauche sur la figure 3) qui présente un deuxième filetage externe, dont le pas est différent de celui du premier filetage externe.

La vis 52 forme un manchon présentant d'une part un filetage interne qui coopère avec ledit deuxième filetage de la vis 11 et, d'autre part, un filetage externe.

En référence à la figure 3, le mécanisme de commande 14 comprend par ailleurs deux bagues 50 et 51 et deux contre-écrous 53 et 54.

La bague 51 est montée encastrée, par exemple par vissage ou collage, dans un orifice traversant la pièce de liaison 21 du corps 10 selon la direction D1.

Cette bague 51 comprend une ouverture intérieure épaulée qui la traverse le long de la direction D1 et qui définit, le long de la direction D1 et de la droite vers la gauche sur la figure 3, une première partie formant un filetage interne coopérant avec ledit premier filetage externe de la vis 11 et une deuxième partie formant un orifice lisse qui présente un diamètre supérieur au diamètre de la première partie de la vis 11.

Concernant la bague 50, celle-ci forme un tube épaulé définissant, le long de la direction D1 et de la droite vers la gauche sur la figure 3, une première partie et une deuxième partie.

La première partie de la bague 50 présente un diamètre interne supérieur au diamètre des première et deuxième parties de la vis 11 et un diamètre externe légèrement inférieur au diamètre de l'orifice formé par la deuxième partie de la bague 51.

La première partie de la bague 50 est reçue dans l'orifice formé par la deuxième partie de la bague 51 de manière à former avec celle-ci une liaison pivot glissant, assurant un guidage en translation lorsque les bagues 50 et 51 sont déplacées l'une par rapport à l'autre le long de la direction de commande D1.

La deuxième partie de la bague 50 est montée encastrée dans un orifice traversant la pièce de liaison 20 du corps 10 selon la direction D1 et comprend une surface intérieure formant un filetage interne et présentant un diamètre interne supérieur au diamètre interne de la première partie de la bague 50.

Le filetage externe de la vis 52 coopère avec le filetage interne de la deuxième partie de la bague 50.

Dans cet exemple, le premier filetage externe de la vis 11 ainsi que le filetage interne de la première partie de la bague 51 ont un pas de 0,2 mm, le deuxième filetage externe de la vis 11 ainsi que le filetage interne de la vis 52 ont un pas de 0,225 mm et le filetage externe de la vis 52 ainsi que le filetage interne de la deuxième partie de la bague 50 ont un pas de 0,5 mm.

Un tel mécanisme de commande 14 permet de réaliser deux types de réglage en fonction de la précision ou quantité de déplacement requises.

D'une part, la vis 11 permet de réaliser un réglage fin compte tenu de la différence, relativement petite, entre le pas du deuxième filetage externe et celui du premier filetage externe de cette vis 11, cette différence étant dans cet exemple de 0,025 mm.

Pour ce faire, le contre-écrou 54 est desserré ou retiré tandis que le contre-écrou 53 est serré contre la bague 50 de manière à bloquer la rotation de la vis 52 par rapport à la bague 50.

La vis 11 est ensuite entraînée en rotation entraînant, en fonction de son sens de rotation autour de l'axe A1, un rapprochement ou un éloignement des pièces de liaison 20 et 21 du corps 10 et, par suite, respectivement une augmentation ou une diminution de la dimension X4 du corps 10 selon la direction d'actionnement D2, entraînant un déplacement de la plate-forme 2 par rapport à l'embase 1.

D'autre part, la vis 52 permet de réaliser un réglage plus grossier compte tenu de la différence relative entre le pas du filetage externe de la vis 52 et le pas du deuxième filetage externe de la vis 11. Dans cet exemple, cette différence est de 0,3 mm, donc relativement grande par rapport à celle entre le pas des premier et deuxième filetages externe de la vis 11.

Pour réaliser ce deuxième type de réglage, le contre-écrou 53 est desserré ou retiré tandis que le contre-écrou 54 est serré contre la vis 52 de manière à solidariser en rotation la vis 52 et la deuxième partie de la vis 11.

La vis 52 est ensuite entraînée en rotation entraînant, en fonction de son sens de rotation autour de l'axe A1, un rapprochement ou un éloignement des pièces de liaison 20 et 21 du corps 10 et, par suite, respectivement une augmentation ou une diminution de la dimension X4 du corps 10 selon la direction d'actionnement D2, entraînant un déplacement de la plate-forme 2 par rapport à l'embase 1.

Le mécanisme de commande 14 assure ainsi une transformation d'un mouvement de rotation de la vis 11 ou des vis 11 et 52 autour de l'axe A1 en un mouvement de translation de l'élément effecteur 23 le long de la direction d'actionnement D2.

Dans cet exemple, le ressort 15 est un ressort de compression interposé entre les pièces de liaison 20 et 21 du corps 10 de manière à exercer sur celles-ci un effort tendant à les écarter l'une de l'autre selon la direction D1.

La précontrainte ainsi exercée par le ressort 15 permet de réduire ou supprimer les jeux dans les filets.

Sur les figures 2 et 3, l'organe d'actionnement 3 est représenté dans une position nominale, c'est-à-dire une position dans laquelle le corps 10 est à l'état libre, sans contrainte de déformation exercée par le mécanisme de commande 14.

En position nominale, les pattes 40 et 41 portées par la pièce de liaison 20 du corps 10 sont positionnées à mi-distance des surfaces de butée interne 32A et externe 33A formées par les éléments d'arrêt 30 et 31. De même, les pattes 40 et 41 portées par la pièce de liaison 21 du corps 10 sont positionnées à mi-distance des surfaces de butée interne 32B et externe 33B formées par les éléments d'arrêt 30 et 31 (voir figure 3).

Il est ainsi possible, à partir de cette position nominale, de déplacer la vis de réglage 11 et/ou 52 dans les deux sens de rotation et donc d'augmenter ou de diminuer la longueur X4 du corps 10 selon la direction d'actionnement D2.

A titre d'exemple, le corps 10 de l'organe d'actionnement 3, les organes de liaison 12 et 13 et les tiges 63 peuvent être réalisés dans un acier comprenant du nickel, du cobalt et du molybdène, tel que l'acier connu sous la dénomination « MARVAL18 ».

Le corps 10 peut être usiné par électroérosion, tandis que les organes de liaison 12 et 13 et les tiges 63 peuvent être usinés par fraisage.

De manière alternative, l'ensemble formé par le corps 10, les organes de liaison 12 et 13 et les tiges 63 peut être réalisé par fabrication additive.

Eventuellement, l'ensemble précité peut être réalisé par fabrication additive avec l'embase 1 et la plate-forme 2 de manière à former une seule et unique pièce.

La vis 11 et la bague 50 peuvent comprendre de l'inox 316L, tandis que la vis 52 et la bague 51 peuvent comprendre un alliage du type cupro-béryllium, de manière à alterner les matériaux et diminuer ainsi les coefficients de frottement.

En référence à la figure 1, l'invention permet ainsi de modifier la longueur des organes d'actionnement 3 selon leur direction d'actionnement respective de manière indépendante et sans utilisation de cales de réglage.

Il est ainsi possible de positionner avec une grande précision la plate-forme 2 et son équipement dans l'espace tridimensionnel, selon les six degrés de liberté.

Dans cet exemple, il est estimé que la précision de positionnement en translation est de l'ordre du micron, avec une plage de réglage de l'ordre de 0,5 mm, et que la précision de positionnement en rotation de l'ordre de quelques millièmes de degré, avec une plage de réglage de l'ordre de 0,7°.

L'invention permet aussi de réduire la masse et l'encombrement du dispositif et de lui procurer une grande tenue à des sollicitations mécaniques telles que des vibrations induites par une fusée.

La description qui précède n'est pas limitative et de nombreuses variantes peuvent être envisagées sans sortir du cadre de l'invention.

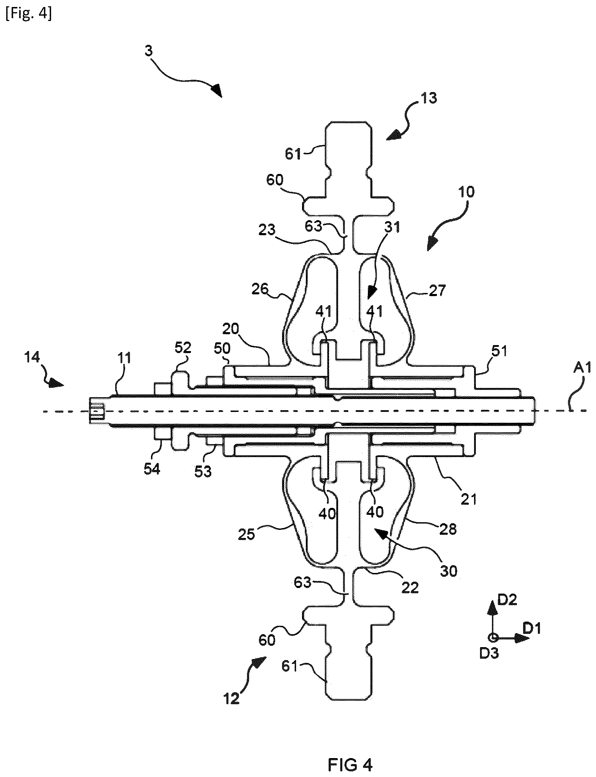

Par exemple, il est représenté sur la figure 4 un organe d'actionnement 3 qui se distingue principalement de celui des figures 2 et 3 en ce qu'il ne comprend pas de ressort de précontrainte 15. L'organe d'actionnement 3 de la figure 4 est ici décrit uniquement selon ses principales différences par rapport aux figures 2 et 3, la description qui précède s'appliquant par analogie à ce mode de réalisation.

En référence à la figure 4, les pattes 40 et 41 de chacune des pièces de liaison 20 et 21 du corps 10 sont en appui sur les surfaces de butée externe 33A et 33B formées par les éléments d'arrêt 30 et 31 lorsque le corps 10 est en position nominale.

Ainsi, à partir de cette position nominale, le corps 10 peut être déformé de manière à déplacer l'élément effecteur 23 uniquement dans un sens le long de la direction d'actionnement D2.

Dans cet exemple, la précontrainte est réalisée par le corps 10 lui-même qui exerce sur les pièces de liaison 20 et 21 un effort tendant à les écarter l'une de l'autre selon la direction D1.

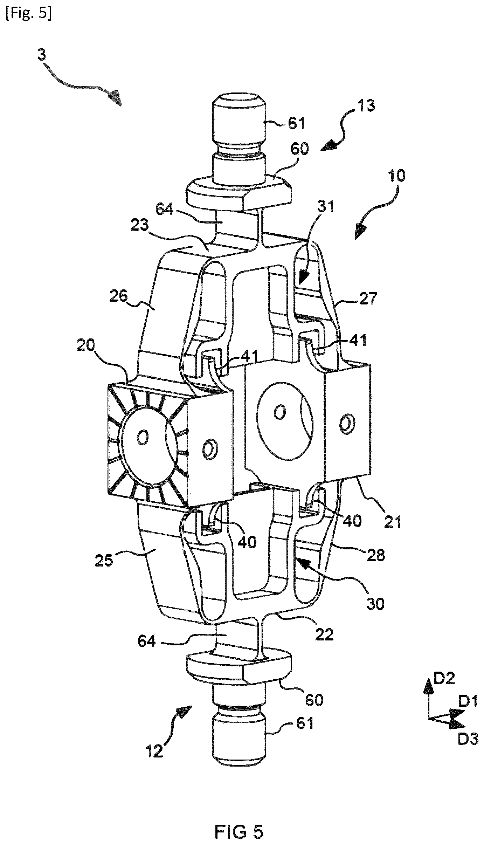

La figure 5 présente un autre mode de réalisation dans lequel les organes de liaison 12 et 13 sont reliés au corps 10 non pas par des tiges mais par des lames 64.

De telles lames de liaison 64 autorisent un déplacement relatif de ces organes de liaison 12 et 13 par rapport au corps 10 selon un degré de liberté, formant des liaisons pivot.

Dans d'autres variantes de réalisation non représentées, le corps 10 peut être relié à l'embase 1 et/ou à la plate-forme 2 sans degré de liberté en rotation. Par exemple, l'élément fileté 61 de l'organe de liaison 12 décrit ci-dessus en référence aux figures 2 et 3 peut s'étendre directement au droit de la surface externe de l'extrémité inférieure 22 du corps 10, c'est-à-dire sans tige ou lame de liaison.

Selon une variante non représentée, le corps 10 de l'organe d'actionnement 3 peut ne pas comprendre les lames 25 et 28, ni l'extrémité inférieure 22, ni l'organe de liaison 12 présents dans les différents modes de réalisation des figures 1 à 5. Notamment, les pièces de liaison 20 et 21 du corps 10 peuvent être reliées directement à l'embase 1, par exemple selon une liaison glissière de manière à permettre un déplacement relatif de ces pièces de liaison 20 et 21 le long de la direction de commande D1 lors du réglage de la position de l'élément effecteur 23.

Le mécanisme de commande 14 peut comprendre une unique vis de réglage 11, auquel cas sa deuxième partie peut coopérer directement avec la bague 50 selon une liaison hélicoïdale.

De plus, les filetages externes de la vis 11 et/ou de la vis 52 peuvent coopérer directement avec des filetages internes formés par les pièces de liaison 20 et 21 du corps 10, c'est-à-dire sans utilisation de bagues 50/51.

Selon une autre variante non représentée, la bague 50 décrite ci-dessus peut être dépourvue de sa première partie de manière à ne pas coopérer avec la bague 51. Plus généralement, l'organe d'actionnement 3 peut ne pas comprendre de moyens de guidage en translation lorsque les pièces de liaison 20 et 21 sont déplacées l'une par rapport à l'autre le long de la direction de commande D1, ou être pourvu de moyens de guidage différents.

Selon encore une autre variante non représentée, la plate-forme 2 de la figure 1 peut former en tant que telle une partie de l'équipement à positionner. Autrement dit, les organes d'actionnement 3 peuvent être directement reliés à l'équipement.

Les modes et variantes de réalisation décrits ci-dessus peuvent en outre être combinés. Par exemple, les organes de liaison 12 et 13 de l'organe d'actionnement 3 de la figure 4 peuvent être reliés au corps 10 par des lames de liaison 64 semblables à celles illustrées à la figure 5.

## Revendications

1. Dispositif de positionnement d'un équipement tel qu'un miroir d'instrument optique spatial, comprenant une plate-forme (2) destinée à recevoir l'équipement ou formant une partie de l'équipement et comprenant six organes d'actionnement (3) reliés à la plate-forme (2), chacun desdits organes d'actionnement (3) comprend un corps (10) élastiquement déformable et un mécanisme de commande (14) configuré pour pouvoir déformer le corps (10) de sorte à modifier la position de la plate-forme (2), **caractérisé en ce que** le mécanisme de commande (14) comprend une première vis (11) de réglage micrométrique et une deuxième vis (52) de réglage pourvue d'un orifice formant un filetage interne qui coopère avec un filetage externe de la première vis (11), le mécanisme de commande (14) étant configuré pour pouvoir déformer le corps (10) sous l'action d'un déplacement en rotation de la première vis (11) et/ou de la deuxième vis (52).

2. Dispositif selon la revendication 1, dans lequel le corps (10) comprend un élément effecteur (23) et deux branches (20, 26 ; 21, 27) reliées chacune à l'élément effecteur (23) de sorte que les branches (20, 26 ; 21, 27) soient espacées l'une par rapport à l'autre selon une direction de commande (D1), le mécanisme de commande (14) étant configuré pour appliquer sur les branches (20, 26 ; 21, 27) un effort mécanique apte à modifier la distance les séparant selon la direction de commande (D1) de manière à déplacer l'élément effecteur (23) selon une direction d'actionnement (D2) perpendiculaire ou oblique par rapport à la direction de commande (D1).

3. Dispositif selon la revendication 2, dans lequel chacune des branches (20, 26 ; 21, 27) du corps (10) comprend une pièce de liaison (20 ; 21) reliée au mécanisme de commande (14) et un élément flexible tel qu'une lame (26 ; 27) reliant la pièce de liaison (20 ; 21) à l'élément effecteur (23) du corps (10).

4. Dispositif selon l'une quelconque des revendications 1 à 3, dans lequel le corps (10) est relié à la plate-forme (2) par un organe de liaison (13), cet organe de liaison (13) étant relié au corps (10) selon une liaison définissant au moins un degré de liberté.

5. Dispositif selon la revendication 4, dans lequel l'organe de liaison (13) est relié au corps (10) par une tige ou une lame.

6. Procédé de positionnement d'un équipement, tel qu'un miroir d'instrument optique spatial, à l'aide d'un dispositif selon l'une quelconque des revendications 1 à 5.

## Patentansprüche

1. Vorrichtung zum Positionieren einer Einrichtung, wie beispielsweise eines Spiegels für ein optisches Instrument für ein Raumfahrzeug, umfassend eine Plattform (2), die dazu bestimmt ist, die Einrichtung aufzunehmen oder einen Teil der Einrichtung zu bilden, und umfassend sechs Betätigungsorgane (3), die mit der Plattform (2) verbunden sind, wobei jedes der Betätigungsorgane (3) einen elastisch verformbaren Körper (10) und einen Steuermechanismus (14) umfasst, der konfiguriert ist, um den Körper (10) zu verformen, sodass er die Position der Plattform (2) verändert, **dadurch gekennzeichnet, dass** der Steuermechanismus (14) eine erste mikrometrische Einstellschraube (11) und eine zweite Einstellschraube (52) umfasst, die mit einer Öffnung versehen ist, die ein Innengewinde bildet, das mit einem Außengewinde der ersten Schraube (11) zusammenwirkt, wobei der Steuermechanismus (14) konfiguriert ist, um den Körper (10) unter der Wirkung einer Drehbewegung der ersten Schraube (11) und/oder der zweiten Schraube (52) zu verformen.

2. Vorrichtung nach Anspruch 1, wobei der Körper (10) ein Effektorelement (23) und zwei Schenkel (20, 26; 21, 27) umfasst, die jeweils mit dem Effektorelement (23) verbunden sind, sodass die Schenkel (20, 26; 21, 27) in einer Steuerrichtung (D1) voneinander beabstandet sind, wobei der Steuermechanismus (14) konfiguriert ist, um auf die Schenkel (20, 26; 21, 27) eine mechanische Kraft auszuüben, die geeignet ist, den Abstand zwischen ihnen in Steuerrichtung (D1) zu verändern, sodass das Effektorelement (23) in einer Betätigungsrichtung (D2) senkrecht oder schräg zur Steuerrichtung (D1) verschoben wird.

3. Vorrichtung nach Anspruch 2, wobei jeder der Schenkel (20, 26; 21, 27) des Körpers (10) ein mit dem Steuermechanismus (14) verbundenes Verbindungsteil (20; 21) und ein flexibles Element, wie beispielsweise eine Klinge (26; 27), umfasst, welches das Verbindungsteil (20; 21) mit dem Effektorelement (23) des Körpers (10) verbindet.

4. Vorrichtung nach einem der Ansprüche 1 bis 3, wobei der Körper (10) über ein Verbindungsorgan (13) mit der Plattform (2) verbunden ist, wobei das Verbindungsorgan (13) mit dem Körper (10) über eine Verbindung verbunden ist, die mindestens einen Freiheitsgrad definiert.

5. Vorrichtung nach Anspruch 4, wobei das Verbindungsorgan (13) über einen Stab oder eine Klinge mit dem Körper (10) verbunden ist.

6. Verfahren zum Positionieren einer Einrichtung, wie beispielsweise eines Spiegels für ein optisches Instrument für ein Raumfahrzeug, mittels einer Vorrichtung nach einem der Ansprüche 1 bis 5.

## Claims

1. Device for positioning an equipment such as a space optical instrument mirror, comprising a platform (2) intended to receive the equipment or forming a portion of the equipment and comprising six actuating members (3) connected to the platform (2), each of said actuating members (3) comprises a body (10) that is elastically deformable and a control mechanism (14) configured to be able to deform the body (10) so as to modify the position of the platform (2), **characterized in that** the control mechanism (14) comprises a first micrometer screw (11) and a second adjustment screw (52) provided with an orifice forming an internal thread which cooperates with an external thread of the first screw (11), the control mechanism (14) being configured to be able to deform the body (10) under the action of a rotational displacement of the first screw (11) and/or of the second screw (52).

2. Device according to claim 1, in which the body (10) comprises an effector component (23) and two arms (20, 26; 21, 27) each connected to the effector component (23) such that the arms (20, 26; 21, 27) are spaced apart with respect to one another according to a control direction (D1), the control mechanism (14) being configured to apply to the arms (20, 26; 21, 27) a mechanical force capable of modifying the distance separating them according to the control direction (D1) so as to displace the effector component (23) according to an actuation direction (D2) that is perpendicular or oblique with respect to the control direction (D1).

3. Device according to claim 2, in which each of the arms (20, 26; 21, 27) of the body (10) comprises a linking part (20; 21) connected to the control mechanism (14) and a flexible component such as a strip (26; 27) connecting the linking part (20; 21) to the effector component (23) of the body (10).

4. Device according to any one of claims 1 to 3, in which the body (10) is connected to the platform (2) by a linking member (13), this linking member (13) being connected to the body (10) by a link defining at least one degree of freedom.

5. Device according to claim 4, in which the linking member (13) is connected to the body (10) by a rod or a strip.

6. Method for positioning an equipment, such as a space optical instrument mirror, using a device according to any one of claims 1 to 5.
